# EUROPEAN PATENT APPLICATION

(11) **EP 4 797 417 A1**
(43) Date of publication of application: **26.08.2026**
(21) Application number: 26157667.2
(22) Date of filing: 10.02.2026
(51) Int. Cl.: H01M 50/375, H01M 50/342

(54) **RECHARGEABLE BATTERY AND BATTERY PACK INCLUDING THE SAME**

(30) Priority: 20.02.2025 KR 20250022113
(71) Applicant: SAMSUNG SDI CO., LTD., Yongin-si, Gyeonggi-do 17084 (KR)
(72) Inventor: KIM, Jin Doo, Suwon-si, Gyeonggi-do 16678 (KR)
(74) Representative: Maiwald GmbH

(57) **Abstract**

A rechargeable battery and a battery pack including the same are disclosed. A rechargeable battery includes a case, an electrode assembly accommodated in the case, a cap plate facing the electrode assembly, and a first vent member on the cap plate, and the first vent member is coupled to the cap plate in a snap-fit manner.

## Description

### BACKGROUND

### 1. Field

Aspects of embodiments of the present disclosure relate to a rechargeable battery and a battery pack including the same.

### 2. Description of Related Art

Recently, with the rapid spread of electronic devices that use batteries, such as cellular phones, laptop computers and electric vehicles, the demand for rechargeable batteries with high energy density and high capacity is rapidly increasing. Accordingly, research and development to improve the performance of lithium rechargeable batteries is actively underway.

A lithium rechargeable battery is a battery including a positive electrode and a negative electrode, which contain active materials capable of intercalation and deintercalation of lithium ions, and an electrolyte, and generates electrical energy through oxidation and reduction reactions when lithium ions are intercalated/deintercalated into/from the positive electrode and the negative electrode.

In a case of thermal runaway of the lithium rechargeable battery, gas may be generated inside the battery. The gas generated inside the battery may operate a vent member, and the safety of the battery can be improved. The vent member may have a characteristic of opening only if the gas generated inside the battery is above a certain (e.g., predetermined) pressure. Accordingly, in a case of an unintended short circuit or rapid thermal runaway due to heat propagation inside the battery, the vent member cannot operate because not enough gas is generated to operate the vent member.

The above information disclosed in this Background section is provided for enhancement of understanding of the background of the present invention and may contain information that does not constitute the related art.

### SUMMARY

According to an aspect of embodiments of the present invention, a rechargeable battery capable of preventing (preventing or substantially preventing) thermal runaway of a battery under conditions in which a gas-driven vent member does not operate, and a battery pack including the same, are provided.

According to another aspect of embodiments of the present invention, a rechargeable battery capable of preventing (preventing or substantially preventing) the thermal runaway of the battery that is operated by only a temperature when rapid heat generation occurs inside a battery due to a short circuit inside a battery cell or thermal runaway of an adjacent battery cell, and a battery pack including the same, are provided.

However, aspects and objects of the present invention are not limited to the above aspects and objects, and other aspects and objects that are not specifically mentioned herein will be clearly understood by those skilled in the art based on the description of the present invention below.

According to one or more embodiments of the present invention, a rechargeable battery includes a case, an electrode assembly accommodated in the case, a cap plate facing the electrode assembly, and a first vent member, and the first vent member is coupled to the cap plate in a snap-fit manner.

According to one or more embodiments of the present invention, a battery pack includes a housing, and a plurality of rechargeable batteries accommodated in the housing, wherein each of the rechargeable batteries includes a case, an electrode assembly accommodated in the case, a cap plate facing the electrode assembly, and a first vent member on the cap plate, and the first vent member is coupled to the cap plate in a snap-fit manner.

### BRIEF DESCRIPTION OF THE DRAWINGS

The following drawings attached to the present specification illustrate some embodiments of the present disclosure and further describe aspects and features of the present disclosure together with the detailed description of the present disclosure. However, the present disclosure is not to be construed as being limited to the drawings, in which:
FIG. 1 is a schematic exploded perspective view showing a configuration of a battery pack according to an embodiment of the present invention;
FIG. 2 is a schematic perspective view showing a configuration of a battery cell according to an embodiment of the present invention;
FIG. 3 is a schematic plan view showing the configuration of the battery cell according to an embodiment of the present invention;
FIG. 4 is a schematic cross-sectional view showing the configuration of the battery cell according to an embodiment of the present invention;
FIG. 5 is a schematic cross-sectional view showing a configuration of a second vent member according to an embodiment of the present invention;
FIG. 6 is a cross-sectional view showing a first vent member according to an embodiment of the present invention;
FIG. 7 is a plan view showing the first vent member according to an embodiment of the present invention;
FIG. 8 is a cross-sectional view showing the first vent member according to an embodiment of the present invention;
FIG. 9 is a cross-sectional view showing a first vent member according to another embodiment of the present invention;
FIG. 10 is a cross-sectional view showing a first vent member according to another embodiment of the present invention;
FIG. 11 is a plan view showing the first vent member of FIG. 10; and
FIG. 12 is a cross-sectional view showing a first vent member according to another embodiment of the present invention.

### DETAILED DESCRIPTION

Herein, some embodiments of the present disclosure will be described in further detail with reference to the accompanying drawings. The terms or words used in the present specification and claims are not to be limitedly interpreted as having general or dictionary meanings, but are to be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not necessarily represent all of the technical spirit, aspects, and features of the present disclosure. Accordingly, it is to be understood that there may be various equivalents and modifications that can replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, or another element may also be interposed between the element and the arbitrary element disposed on (or under) the element.

In addition, it is to be understood that when a component is referred to as being "linked," "coupled," or "connected" to another component, the elements may be directly "coupled," "linked" or "connected" to each other, or one or more other components may be interposed between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

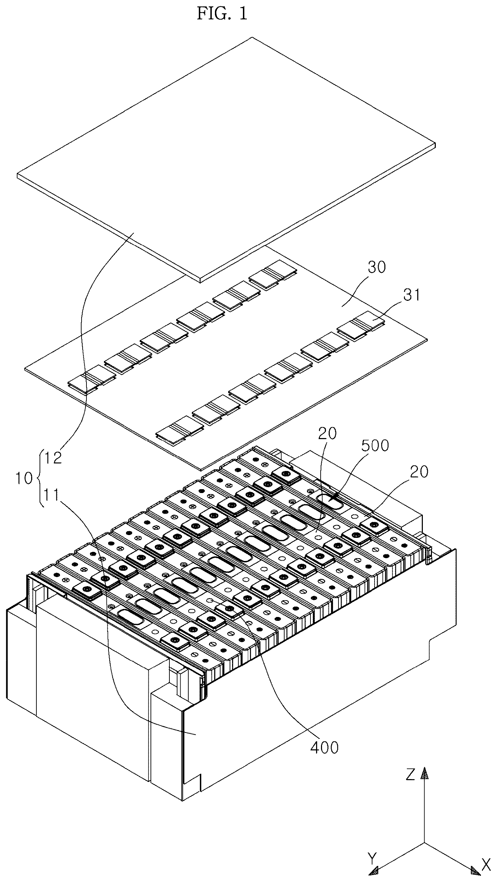

FIG. 1 is a schematic exploded perspective view showing a configuration of a battery pack according to an embodiment of the present invention.

The configuration of the battery pack will be described with reference to FIG. 1.

The battery pack may include a housing 10 and battery cells 20 disposed inside, or accommodated in, the housing 10.

The housing 10 may include a housing body 11 and a housing cover 12 covering the housing body 11. The housing 10 may provide a space for accommodating the battery cells 20.

A busbar holder 30 in which a busbar 31 is formed may be disposed between the housing cover 12 and the housing body 11. The busbar 31 may control operation of the battery cells 20. The busbar holder 30 may allow a plurality of busbars 31 to be fixed.

The battery cell 20 may function as a unit structure that stores and supplies power in a battery module. The battery cell 20 may be disposed inside the housing 10.

The battery cell 20 may be provided as one or more battery cells. FIG. 1 shows an example in which a plurality of battery cells 20 are provided, but the battery cell 20 is not limited thereto and may be provided as a single battery cell.

In an embodiment, the plurality of battery cells 20 are provided, and the plurality of battery cells 20 may be arranged in multiple rows inside the housing 10. For example, the plurality of battery cells 20 may be arranged in multiple rows in a longitudinal direction (Y-axis direction based on FIG. 1) of the housing 10. However, an arrangement of the plurality of battery cells 20 is not limited thereto, and the plurality of battery cells 20 may be arranged in multiple rows in a width direction (X-axis direction based on FIG. 1) of the housing 10 or arranged in multiple rows in the longitudinal direction and the width direction of the housing 10.

The battery cell 20 may include a blocking member 500 and a first vent member 400, which will be described below.

Herein, an example in which the battery cell 20 is a prismatic lithium ion rechargeable battery will be described. However, the present invention is not limited thereto, and the battery cell 20 may be a lithium polymer battery or a cylindrical battery, for example.

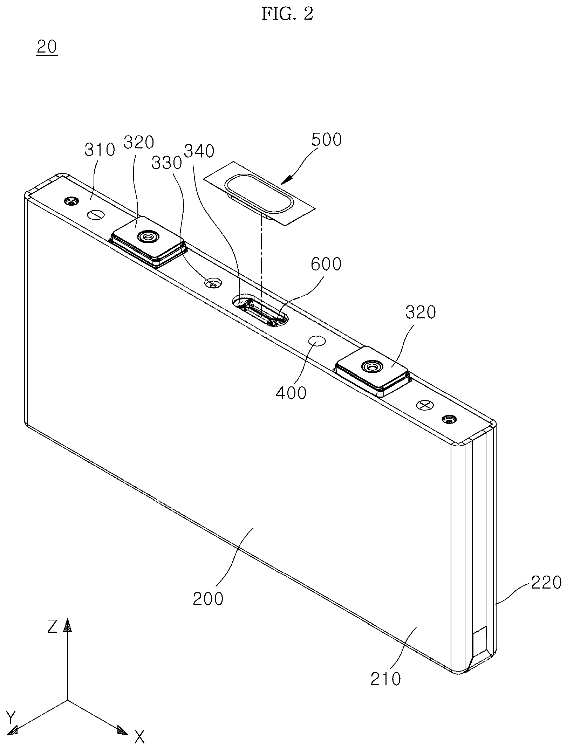

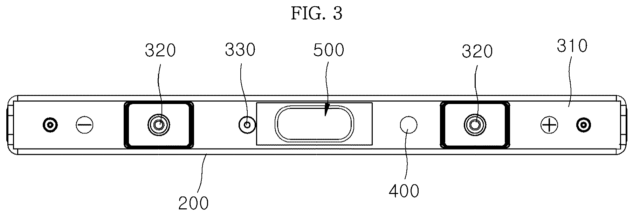

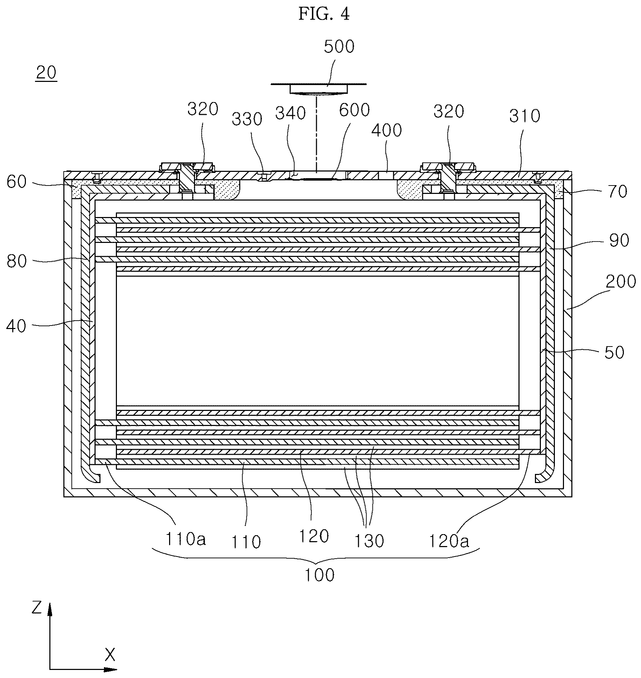

FIG. 2 is a schematic perspective view showing a configuration of a battery cell according to an embodiment of the present invention; FIG. 3 is a schematic plan view showing the configuration of the battery cell according to an embodiment of the present invention; and FIG. 4 is a schematic cross-sectional view showing the configuration of the battery cell according to an embodiment of the present invention.

The configuration of the battery cell according to an embodiment will be described with reference to FIGS. 2 to 4.

The battery cell 20 includes an electrode assembly 100, a cell case 200, a cap plate 310, a first vent member 400, a blocking member 500, and a second vent member 600.

The electrode assembly 100 may include a separator 130 disposed between a positive electrode 110 and a negative electrode 120.

The positive electrode 110 and the negative electrode 120 may include a coated portion, which is a region in which a current collector formed of a thin metal foil is coated with an active material, and non-coated portions 110a and 120a, which are regions that are not coated with the active material.

In an embodiment, the electrode assembly 100 may be wound in the form of a jelly roll after the separator 130 as an insulator is interposed between the positive electrode 110 and the negative electrode 120. However, the electrode assembly 100 is not limited to such a form and, in an embodiment, may be formed in a stacked structure in which the positive electrodes 110 and the negative electrodes 120 that are formed of a plurality of sheets are alternately stacked with the separator 130 interposed therebetween.

The positive electrode according to an embodiment may be formed to have a form of a foil including a metal material, such as aluminum or an aluminum alloy. A type, size, shape, and the like of the positive electrode are not particularly limited as long as the positive electrode has conductivity without causing a chemical change in a rechargeable battery. A cross-sectional shape of the positive electrode may have any of various shapes in addition to a rectangular shape.

The positive electrode may be provided as a plurality of positive electrodes. The plurality of positive electrodes may be arranged in a thickness direction (e.g., a Y-axis direction of FIG. 2) between a front portion 210 and a rear portion 220 of the cell case 200. A number of positive electrodes 110 may be varied depending on a charging capacity and the like of the rechargeable battery.

At least a portion of the positive electrode may be coated with a positive electrode active material layer. Both, or opposite, surfaces of the positive electrode or only one surface of the positive electrode 110 may be coated with the positive electrode active material layer.

The positive electrode active material layer may include a positive electrode active material.

The positive electrode active material may be a compound capable of reversible intercalation and deintercalation of lithium (a lithiated intercalation compound). In an embodiment, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) and include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The positive electrode active material layer may further include a positive electrode conductive material.

The positive electrode conductive material imparts conductivity to the positive electrode active material layer, and any suitable material that is an electrically conductive material without causing a chemical change may be used. Examples of the positive electrode conductive material may include carbon-based materials, such as natural graphite, artificial graphite, carbon black, acetylene black, Ketjen black, carbon fibers, carbon nanofibers, carbon nanotubes, and the like, metal-based materials in the form of metal powder or metal fibers containing copper, nickel, aluminum, silver, and the like, conductive polymers, such as polyphenylene derivatives, and the like, or a mixture thereof.

The positive electrode active material layer may further include a positive electrode binder.

The positive electrode binder may attach particles constituting the positive electrode active material well and also attach the positive electrode active material to the positive electrode well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose-based compound capable of imparting viscosity. As the cellulose-based compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The positive electrode may include a non-coated portion 110a that is not coated with a positive electrode active material layer. The non-coated portion 110a according to an embodiment may be disposed in an upper region of the positive electrode facing upward inside the case 200. However, the non-coated portion 110a is not limited to such a form and, in an embodiment, may be formed over an entire edge region of the positive electrode.

The negative electrode according to an embodiment may be provided as a plurality of negative electrodes. The plurality of negative electrodes may be arranged in the thickness direction (e.g., a Y-axis direction of FIG. 2) between the front portion 210 and the rear portion 220 of the cell case 200. The positive electrode and the negative electrode may be alternately disposed in the thickness direction. The negative electrode may be spaced by a distance (e.g., a predetermined distance) from the positive electrode in the thickness direction.

The negative electrode according to an embodiment may be formed to have a form of a foil including a metal material, such as copper, a copper alloy, nickel, or a nickel alloy. A type, size, shape, and the like of the negative electrode are not particularly limited as long as the negative electrode has conductivity without causing a chemical change in a rechargeable battery. A cross-sectional shape of the negative electrode may have any of various shapes in addition to a rectangular shape.

At least a portion of the negative electrode may be coated with a negative electrode active material layer. Both, or opposite, surfaces of the negative electrode or only one surface of the negative electrode may be coated with the negative electrode active material layer.

The negative electrode active material layer may include a negative electrode active material.

The negative electrode active material may include a material capable of reversible intercalation/deintercalation of lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, which may include, for example, crystalline carbon, amorphous carbon, or a combination thereof. An example of crystalline carbon may include graphite, such as amorphous, plate-like, flaky, spherical, or fibrous natural graphite or artificial graphite, and examples of amorphous carbon may include soft carbon, hard carbon, mesophase pitch carbide, calcined coke, etc.

In an embodiment, as the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, SiOₓ (0<x≤2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in a form of silicon particles of which surfaces are coated with amorphous carbon. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The negative electrode active material layer may further include a negative electrode binder.

The negative electrode conductive material imparts conductivity to the negative electrode active material layer, and any suitable material that is an electrically conductive material without causing a chemical change may be used. Examples of the negative electrode conductive material may include carbon-based materials, such as natural graphite, artificial graphite, carbon black, acetylene black, Ketjen black, carbon fibers, carbon nanofibers, carbon nanotubes, and the like, metal-based materials in the form of metal powder or metal fibers containing copper, nickel, aluminum, silver, and the like, conductive polymers, such as polyphenylene derivatives and the like, or a mixture thereof.

The negative electrode binder may attach particles constituting the negative electrode active material well and also attach the negative electrode active material to the negative electrode well.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, an polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose-based compound capable of imparting viscosity. As the cellulose-based compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The negative electrode may include a non-coated portion 120a that is not coated with a negative electrode active material layer. The non-coated portion 120a according to an embodiment may be disposed in an upper region of the negative electrode facing upward inside the case. However, the non-coated portion 120a is not limited to such a form and, in an embodiment, may be formed over an entire edge region of the negative electrode.

The separator may be disposed between the positive electrode and the negative electrode. The separator may prevent or substantially prevent a short circuit between the positive electrode and the negative electrode while allowing the movement of lithium ions between the positive electrode and the negative electrode.

In an embodiment, the separator may be disposed to completely cover a surface region of the electrode assembly 100. Accordingly, the separator may prevent or substantially prevent the positive electrode and the negative electrode from being directly exposed to the outside of the electrode assembly 100.

As the separator, a multilayered membrane of polyethylene, polypropylene, polyvinylidene fluoride or two or more layers thereof may be used, and a mixed multilayered membrane, such as a polyethylene/polypropylene two-layer separator, a polyethylene/polypropylene/polyethylene three-layer separator, or a polypropylene/polyethylene/polypropylene three-layer separator, may be used.

The separator may include a porous substrate and a coating layer including an organic material, an inorganic material, or a combination thereof located on one surface or both, or opposite, surfaces of the porous substrate.

The porous substrate may be a polymer film made of one polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymers, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from any of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer or in the form of a coating layer containing an organic material and a coating layer containing an inorganic material that are stacked on each other.

The electrode assembly 100 may be provided as one electrode assembly or a plurality of electrode assemblies.

The cell case 200 may form an overall exterior of the battery cell 20. The cell case 200 may accommodate the electrode assembly 100 therein. For example, the cell case 200 may be formed to have a rectangular parallelepiped shape with an open surface. The open surface of the cell case 200 may be disposed to face the housing cover 12 in an up-down direction inside the housing 10.

The case 200 may include a conductive metal material, such as aluminum, an aluminum alloy, or nickel-plated steel.

The cap plate 310 may be coupled to the cell case 200 and may seal the cell case 200. For example, the cap plate 310 may be formed to have a flat shape. The cap plate 310 may be disposed to cover the open side of the cell case 200 on an upper side of the cell case 200. The cap plate 310 may be coupled to the cell case 200 by any of various types of coupling methods, such as welding, bolting, fitting, etc. In an embodiment, the cap plate 310 may be formed of a conductive material including at least one of aluminum and an aluminum alloy.

The cap plate 310 may include a terminal 320.

The terminal 320 may be installed to pass through the cap plate 310 and protrude outward from the cap plate 310. In an embodiment, an outer surface of an upper pillar of the terminal 320 may be screw-processed and fixed to the cap plate 310 with a nut. However, the present invention is not limited thereto, and, in an embodiment, the terminal 320 may have a rivet structure and may be riveted and welded to the cap plate 310.

A pair of terminals 320 protruding outward from the cap plate 310 may be formed. The pair of terminals 320 may be individually connected to the positive electrode 110 and the negative electrode 120 of the electrode assembly 100. Accordingly, the pair of terminals 320 may function as a positive electrode terminal and a negative electrode terminal of the battery cell 20, respectively.

For example, the terminal 320 may be electrically connected to a current collector including first and second current collectors 40 and 50 (herein referred to as positive and negative electrode current collectors) welded and bonded to the positive electrode non-coated portion 110a or the negative electrode non-coated portion 120a. For example, the pair of terminals 320 may be welded and coupled to the positive and negative electrode current collectors 40 and 50, respectively. However, the present invention is not limited thereto, and, in an embodiment, the terminals 320 and the positive and negative electrode current collectors 40 and 50 may be integrally formed.

In an embodiment, the cap plate 310 may further include an electrolyte injection port 330 in which a sealing plug may be installed.

The cap plate 310 may further include a vent hole 340.

The vent hole 340 may be formed to have a form of a hole passing through both, or opposite, surfaces of the cap plate 310. The vent hole 340 may provide a path along which flames, gas, smoke, and the like generated inside the cell case 200 are discharged from the battery cell 20 during thermal runaway of the battery cell 20. A lower side of the vent hole 340 may be connected to a space inside the cell case 200. An upper side of the vent hole 340 may be connected to a space outside the cap plate 310. A cross-sectional shape of the vent hole 340 may have any of various shapes, such as an oval, circle, polygon, etc.

The second vent member 600 may open and close in response to a change in internal pressure of the cell case 200. That is, the second vent member 600 may maintain a closed state during normal operation of the battery cell 20 to seal the cell case 200. The second vent member 600 may open if the internal pressure of the cell case 200 rises above a certain (e.g., set) level due to overcharging or fire of the battery cell 20 and may discharge flames, gas, smoke, and the like generated inside the cell case 200 to the outside of the cell case 200.

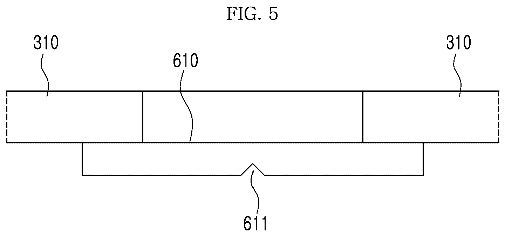

FIG. 5 is a schematic cross-sectional view showing a configuration of a second vent member according to an embodiment of the present invention.

Referring to FIG. 5, the second vent member 600 according to an embodiment may be formed to have a flat (e.g., plate) shape. The second vent member 600 may be disposed to face a lower end of the vent hole 340. In an embodiment, an area of the second vent member 600 may be formed to be larger than a cross-sectional area of the vent hole 340. An upper surface of the second vent member 600 may be coupled to a lower surface of the cap plate 310 by any of various types of coupling methods, such as welding, bolting, fitting, etc.

The second vent member 600 may include a fracture portion 610.

The fracture portion 610 may form a portion of the exterior of the second vent member 600. The fracture portion 610 may fracture as the internal pressure of the cell case 200 rises above a certain (e.g., set) pressure, thereby opening the second vent member 600.

For example, the fracture portion 610 may protrude from the upper surface of the second vent member 600 toward the vent hole 340. In an embodiment, the fracture portion 610 may be formed to have a width that becomes narrower toward an upper end thereof. The fracture portion 610 may be cut to both, or opposite, sides of the upper end by pressure applied from the internal space of the cell case 200. In an embodiment, a notch 611 for inducing the fracture operation of the fracture portion 610 may be formed on an upper inner surface of the fracture portion 610. A cross-sectional shape of the fracture portion 610 is not limited to the shape shown in FIG. 5 and may be formed to have any of various patterns on the second vent member 600.

An insulating member may be installed between the electrode assembly 100 and the cap plate 310. The insulating member may include first and second lower insulating members 60 and 70, and each of the first and second lower insulating members 60 and 70 may be installed between the electrode assembly 100 and the cap plate 310.

An end of a separation member that may be installed to face a side surface of the electrode assembly 100 may be installed between the insulating member and the terminal 320.

The separation member may include first and second separation members 80 and 90.

Ends of the first and second separation members 80 and 90, which may be installed to face the side surface of the electrode assembly 100, may be installed between the first and second lower insulating members 60 and 70 and the pair of terminals 320.

The terminal 320 welded and coupled to the positive and negative electrode current collectors 40 and 50 may be coupled to the first and second lower insulating members 60 and 70 and the ends of the first and second separation members 80 and 90.

A rechargeable battery according to an embodiment can be easily operated even under conditions in which the gas-driven vent member does not operate by including the first vent member to be described below, thereby preventing or substantially preventing thermal runaway of the battery. In addition, the rechargeable battery can be operated by only the temperature when the rapid heat generation occurs inside the battery cell due to a short circuit inside the battery cell or thermal runaway of an adjacent battery cell, thereby preventing or substantially preventing the thermal runaway of the battery.

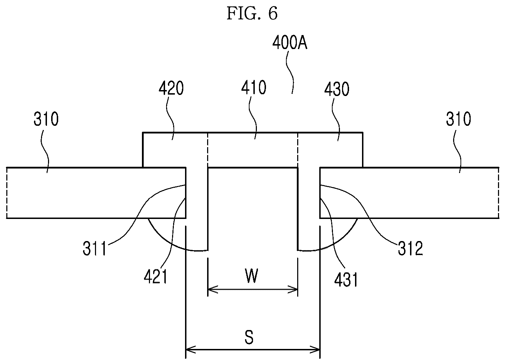

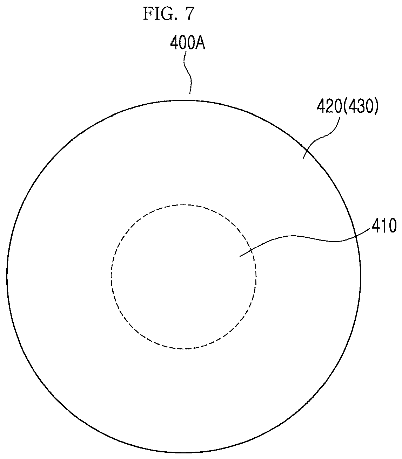

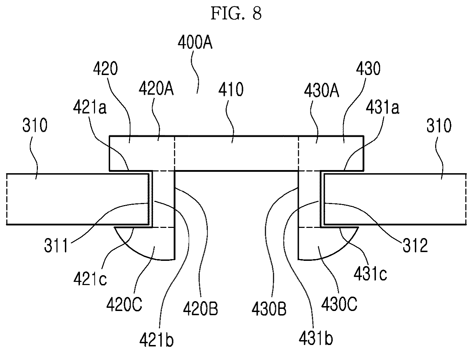

FIG. 6 is a cross-sectional view showing a first vent member according to an embodiment of the present invention; FIG. 7 is a plan view showing the first vent member according to an embodiment of the present invention; and FIG. 8 is a cross-sectional view showing the first vent member according to an embodiment of the present invention.

The first vent member will be described with reference to FIGS. 6 to 8.

A first vent member 400A is fastened to the cap plate 310 in a snap-fit manner. Here, the snap-fit manner may refer to coupling by a snap protrusion being inserted into a snap groove. Accordingly, if the internal temperature of the battery cell 20 rises due to the occurrence of thermal runaway within the battery cell 20, the first vent member 400A may be separated from the cap plate 310 as the coupling between the first vent member 400A and the cap plate 310 is loosened due to the heat, thereby reducing the internal temperature of the battery cell 20 and increasing the heat dissipation of the battery cell 20 to prevent or substantially prevent additional thermal runaway.

The first vent member 400A is composed of a main body 410, a first fastening part 420, and a second fastening part 430, and, in an embodiment, the main body 410, the first fastening part 420, and the second fastening part 430 may be integrally formed.

The main body 410 may be formed between the first fastening part 420 and the second fastening part 430, and the main body 410 may connect the first fastening part 420 and the second fastening part 430. The main body 410 may support the first fastening part 420 and the second fastening part 430 and adjust a distance between the first fastening part 420 and the second fastening part 430.

The first fastening part 420 is formed on a side of the main body 410. The first fastening part 420 has a first snap groove 421 formed in a side facing the main body 410 and thus may fasten the first vent member 400A to the cap plate 310 in a snap-fit manner.

The first snap groove 421 may provide a space in which a first snap protrusion 311 of the cap plate 310 is inserted and fastened in a snap-fit manner.

The second fastening part 430 is formed on another side of the main body 410. The second fastening part 430 has a second snap groove 431 formed in a side facing the main body 410 and thus may fasten the first vent member 400A to the cap plate 310 in a snap-fit manner.

The second snap groove 431 may provide a space in which a second snap protrusion 312 of the cap plate 310 is inserted and fastened in a snap-fit manner.

The first fastening part 420 and the second fastening part 430 may have a higher melting point than the cap plate 310.

In an embodiment, the first fastening part 420 and the second fastening part 430 may each include a resin having a melting point of 150 °C or higher, for example, 150 to 200 °C or 200 °C or higher. In the above range, if the internal temperature of the battery cell rises, the resin begins to melt due to the heat, and, as a result, the fastening between the first snap protrusion and the first snap groove in a snap-fit manner and the fastening between the second snap protrusion and the second snap groove in a snap-fit manner are loosened, causing the first fastening part and the second fastening part to be separated from the cap plate, thereby preventing or substantially preventing thermal runaway.

According to an embodiment, the resin may include one or more of polyethylene including low-density polyethylene, high-density polyethylene, and the like, a polyolefin including polypropylene and the like, nylon, polyimide, and polyacetal.

According to an embodiment, the main body 410 may be formed of a same resin as each of the first fastening part 420 and the second fastening part 430. In an embodiment, the main body 410 may include a resin having a melting point of 150 °C or higher, for example, 150 to 200 °C or 200 °C or higher. Accordingly, if the internal temperature of the battery cell rises, the resin begins to melt due to the heat, thereby increasing the speed at which the first fastening part and the second fastening part are separated from the cap plate.

According to an embodiment, a width W of the main body 410 may be in a range from 50 to 80% of a width S between the first snap groove 421 and the second snap groove 431. In the above range, the first vent member 400A can be stably fixed to the cap plate 310 and can allow the heat inside the battery cell to be quickly discharged to the outside during thermal runaway of the battery cell.

In an embodiment, a thickness of the main body 410 may be 100 µm or less, for example, in a range from 50 to 100 µm. In the above range, when heat is continuously applied from the battery cell 20, the main body 410 may open within several hours to reduce an internal temperature of the cell and increase heat dissipation compared to the heat generation of the cell, thereby easily preventing or substantially preventing additional thermal runaway.

The first snap groove 421 may be composed of a first surface 421a, a third surface 421c facing the first surface 421a, and a second surface 421b connecting the first surface 421a to the third surface 421c. The first surface 421a is a surface in contact with an upper surface of the cap plate 310, that is, an upper surface of the first snap protrusion 311. The third surface 421c is a surface in contact with a lower surface of the cap plate 310, that is, a lower surface of the first snap protrusion 311.

Referring to FIGS. 6 to 8, the first snap groove 421 composed of the first surface 421a, the second surface 421b, and the third surface 421c may have a "c" shape, but the present invention is not limited thereto. For example, the first snap groove 421 may include at least a curved surface.

The first fastening part 420 may be composed of a first portion 420A which is connected to the main body 410 and on which the first surface 421a is formed, a second portion 420B which is connected to the first portion 420A and on which the second surface 421b is formed, and a third portion 420C which is connected to the second portion 420B and on which the third surface 421c is formed.

The second snap groove 431 may be composed of a first surface 431a, a third surface 431c facing the first surface 431a, and a second surface 431b connecting the first surface 431a to the third surface 431c. The first surface 431a is a surface in contact with an upper surface of the cap plate 310, that is, an upper surface of the second snap protrusion 312. The third surface 431c is a surface in contact with a lower surface of the cap plate 310, that is, a lower surface of the second snap protrusion 312.

Referring to FIGS. 6 to 8, the second snap groove 431 composed of the first surface 431a, the second surface 431b, and the third surface 431c may have a "⊂" shape, but the present invention is not limited thereto. For example, the second snap groove 431 may include at least a curved surface.

The second fastening part 430 may be composed of a first portion 430A which is connected to the main body 410 and on which the first surface 431a is formed, a second portion 430B which is connected to the first portion 430A and on which the second surface 431b is formed, and a third portion 430C which is connected to the second portion 430B and on which the third surface 431c is formed.

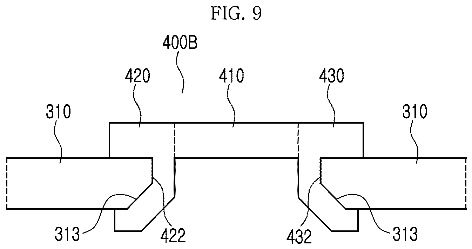

FIG. 9 is a cross-sectional view showing a first vent member according to another embodiment.

Referring to FIG. 9, a first vent member 400B is composed of a main body 410, a first fastening part 420, and a second fastening part 430, and the main body 410, the first fastening part 420, and, in an embodiment, the second fastening part 430 may be integrally formed.

The first vent member 400B of FIG. 9 may be substantially the same as the first vent member of FIG. 6, except that each of the first snap protrusion and the second snap protrusion has one tapered corner.

A first snap groove 422 may provide a space in which a first snap protrusion 313 of the cap plate 310 is inserted and has one tapered corner. A second snap groove 432 may provide a space in which a second snap protrusion 314 of the cap plate 310 is inserted and has one tapered corner. Accordingly, during thermal runaway of the battery cell, the first snap protrusion 313 can be easily separated from the first snap groove 422, and the second snap protrusion 314 can be easily separated from the second snap groove 432.

Referring to FIGS. 6 to 9, in an embodiment, the main body 410 may be a plate that is entirely formed of the same resin. However, in an embodiment, the main body 410 may include different types of resin. In an embodiment, the main body 410 may include a thermal actuating vent.

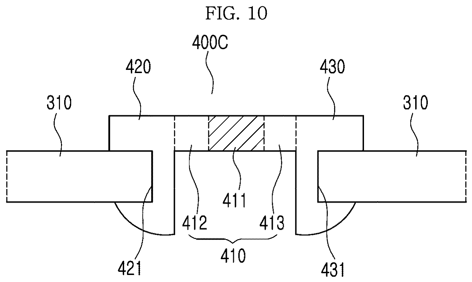

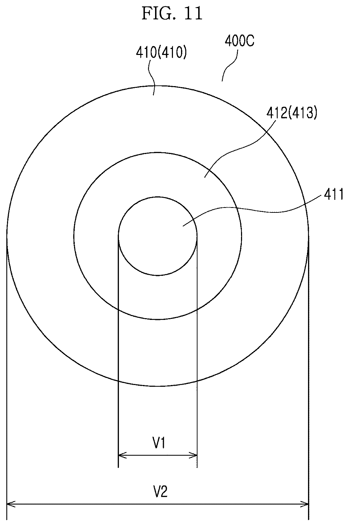

FIG. 10 is a cross-sectional view showing a first vent member according to another embodiment of the present invention; and FIG. 11 is a plan view showing the first vent member of FIG. 10.

The first vent member will be described with reference to FIGS. 10 and 11.

The first vent member of FIGS. 10 and 11 may be substantially the same as the first vent member of FIG. 6, except that the main body further includes a thermal actuating vent.

A first vent member 400C may be fastened to the cap plate 310 in a snap-fit manner.

The first vent member 400C is composed of a main body 410, a first fastening part 420, and a second fastening part 430.

The main body 410 is formed between the first fastening part 420 and the second fastening part 430. In an embodiment, the first fastening part 420 may have the first snap groove 421 formed in the side facing the main body 410, and the first snap protrusion 311 of the cap plate 310 may be inserted and fastened to the first snap groove 421 in a snap-fit manner. Since the second fastening part 430 may have the second snap groove 431 formed in the side facing the main body 410, the second snap protrusion 312 of the cap plate 310 may be inserted and fastened to the second snap groove 431 in a snap-fit manner.

The main body 410 may include a thermal actuating vent 411 located in a central portion of the main body 410, a first connecting portion 412 connecting the thermal actuating vent 411 to the first fastening part 420, and a second connecting portion 413 connecting the thermal actuating vent 411 to the second fastening part 430. The first connecting portion 412 and the second connecting portion 413 may surround an outer surface of the thermal actuating vent 411.

The thermal actuating vent 411 is located in the central portion of the main body 410. Accordingly, heat generated from thermal runaway of the battery cell 20 can be easily dissipated to the outside.

In an embodiment, the thermal actuating vent 411 may include a resin having a lower melting point than each of the first fastening part 420 and the second fastening part 430.

Accordingly, during the thermal runaway of the battery cell 20, the thermal actuating vent 411 may melt relatively quickly compared to the first fastening part 420 and the second fastening part 430, thereby quickly dissipating the heat inside the battery cell 20. In addition, the thermal actuating vent 411 may melt relatively quickly compared to the first fastening part 420 and the second fastening part 430, thereby weakening the bonding between the thermal actuating vent 411 and the first connecting portion 412 and weakening the bonding between the thermal actuating vent 411 and the second connecting portion 413 such that the first fastening part 420 is easily separated from the cap plate 310 and the second fastening part 430 is easily separated from the cap plate 310, and, as a result, it is possible to prevent or substantially prevent thermal runaway more quickly.

In an embodiment, the thermal actuating vent 411 may include a resin having a melting point of 150 to 200 °C. For example, the resin may include polyolefins, such as low-density polyethylene, high-density polyethylene, polypropylene, and the like, polyurethane, and the like, but is not limited thereto.

A width of the thermal actuating vent 411 has an appropriate ratio with respect to a maximum distance between the first fastening part 420 and the second fastening part 430. For example, a width V1 of the thermal actuating vent may be in a range from 10 to 50%, for example, 20 to 40%, of a maximum distance V2 between the first fastening part 420 and the second fastening part 430.

In an embodiment, a thickness of the thermal actuating vent 411 may be 100 µm or less, for example, from 50 to 100 µm. In the above range, when heat is continuously applied from the battery cell 20, the main body 410 may open within several hours to reduce the internal temperature of the cell and increase heat dissipation compared to the heat generation of the cell, thereby easily preventing or substantially preventing additional thermal runaway.

In an embodiment, the thermal actuating vent 411 may have a circular shape. In this case, if heat is generated from the battery cell 20, the main body 410 may react to the heat evenly. However, the present invention is not limited thereto, and, in an embodiment, the thermal actuating vent 411 may have an oval or amorphous shape.

Each of the first fastening part 420 and the second fastening part 430 may include a resin having a higher melting point than the thermal actuating vent 411. In this case, even if gas is generated in the battery cell during thermal runaway of the battery cell 20, deformation cannot occur.

In an embodiment, for example, the first fastening part 420 and the second fastening part 430 may include a resin having a melting point of 200 °C or higher, for example, 200 to 250 °C. For example, the resin may be nylon, polyimide, polyacetal, polypropylene, or the like, but is not limited thereto.

The first connecting portion 412 may be located between the thermal actuating vent 411 and the first fastening part 420 to connect them. The first connecting portion 412 may include a resin having a higher melting point than the thermal actuating vent 411. The first connecting portion 412 may be bonded to the thermal actuating vent 411 by an adhesive or thermal welding.

The second connecting portion 413 may be located between the thermal actuating vent 411 and the second fastening part 430 to connect the thermal actuating vent 411 and the second fastening part 430. The second connecting portion 413 may include a resin having a higher melting point than the thermal actuating vent 411. The second connecting portion 413 may be bonded to the thermal actuating vent 411 by an adhesive or thermal welding.

In an embodiment, the first connecting portion 412 and the second connecting portion 413 may be formed of a same resin as the first fastening part 420 and the second fastening part 430, respectively.

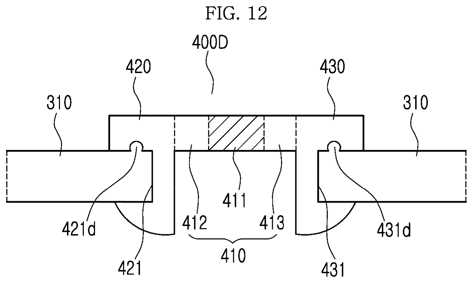

FIG. 12 is a cross-sectional view showing a first vent member according to another embodiment.

The first vent member will be described with reference to FIG. 12.

The first vent member of FIG 12 may be substantially the same as the first vent member of FIGS. 10 and 11, except that a catch is further included in a surface of the snap groove.

A first vent member 400D may be fastened to the cap plate 310 in a snap-fit manner.

The first vent member may include the main body 410 having the thermal actuating vent 411, the first connecting portion 412, and the third connecting portion 413, the first fastening part 420 having the first snap groove 421, and the second fastening part 430 having the second snap groove 431.

A first catch 421d is formed in one surface of the first snap groove 421, and a second catch 431d is formed in one surface of the second snap groove 431. Accordingly, if the thermal actuating vent 411 melts due to the heat of the battery cell 20, each of the first fastening part 420 and the second fastening part 430 are caught on the catch such that the thermal actuating vent 411, the first connecting portion 412, and the second connecting portion 413 easily tilt toward the cell, thereby easily dissipating the heat inside the battery cell 20.

According to embodiments of the present invention, a rechargeable battery can be easily operated, even under conditions in which a gas-driven vent member does not operate, thereby preventing or substantially preventing thermal runaway of the battery.

According to embodiments of the present invention, a rechargeable battery can be operated by only a temperature when rapid heat generation occurs inside a battery due to a short circuit inside a battery cell or thermal runaway of an adjacent battery cell, thereby preventing or substantially preventing thermal runaway of the battery.

However, aspects and effects obtainable through the present invention are not limited to the above aspects and effects, and other aspects and technical effects that are not described will be clearly understood by those skilled in the art based on the description of the present invention.

## Claims

1. A rechargeable battery comprising:
a case;
an electrode assembly accommodated in the case;
a cap plate facing the electrode assembly; and
a first vent member on the cap plate,
wherein the first vent member is coupled to the cap plate in a snap-fit manner.

2. The rechargeable battery as claimed in claim 1, wherein:
the first vent member comprises a main body, a first fastening part which is located on a first side of the main body and in which a first snap groove is formed, and a second fastening part which is located on a second side of the main body and in which a second snap groove is formed; and
the cap plate comprises a first snap protrusion fastened to the first snap groove in the snap-fit manner, and a second snap protrusion fastened to the second snap groove in the snap-fit manner.

3. The rechargeable battery as claimed in claim 2, wherein each of the first fastening part and the second fastening part has a higher melting point than the cap plate, wherein,
preferably, each of the first fastening part and the second fastening part has a melting point of 200 °C or higher, and,
more preferably, each of the first fastening part and the second fastening part comprises one or more resins selected from polyethylene, polypropylene, polyurethane, nylon, polyimide, and polyacetal.

4. The rechargeable battery as claimed in claim 2 or claim 3, wherein
the first snap groove comprises a first surface, a third surface facing the first surface, and a second surface connecting the first surface and the third surface,
the first fastening part has a first portion which is connected to the main body and on which the first surface is formed, a second portion which is connected to the first portion and on which the second surface is formed, and a third portion which is connected to the second portion and on which the third surface is formed,
the second snap groove has a first surface, a third surface facing the first surface, and a second surface connecting the first surface and the third surface, and
the second fastening part has a first portion which is connected to the main body and on which the first surface is formed, a second portion which is connected to the first portion and on which the second surface is formed, and a third portion which is connected to the second portion and on which the third surface is formed.

5. The rechargeable battery as claimed in claim 4, wherein each of the first snap groove and the second snap groove has a "c" shape, wherein,
preferably, each of the first snap groove and the second snap groove has a "c" shape with a tapered corner.

6. The rechargeable battery as claimed in any one of claims 1-5, wherein the main body comprises a thermal actuating vent.

7. The rechargeable battery as claimed in claim 6, wherein the main body comprises:
the thermal actuating vent;
a first connecting portion around an outer surface of the thermal actuating vent and connected to the first fastening part; and
a second connecting portion around the outer surface of the thermal actuating vent and connected to the second fastening part; wherein,
preferably, the thermal actuating vent has a circular, oval, or amorphous shape.

8. The rechargeable battery as claimed in claim 7, wherein the thermal actuating vent is a layer comprising a resin having a lower melting point than that of the first fastening part and the second fastening part, wherein,
preferably, the resin has a melting point of 150 to 200 °C.

9. The rechargeable battery as claimed in claim 7, wherein the thermal actuating vent is bonded to each of the first connecting portion and the second connecting portion by an adhesive or welding.

10. The rechargeable battery as claimed in claim 7, wherein a width of the thermal actuating vent is from 10 to 50% of a maximum distance between the first connecting portion and the second connecting portion.

11. The rechargeable battery as claimed in claim 7, wherein a width of the main body is from 50 to 80% of a width between the first snap groove and the second snap groove.

12. The rechargeable battery as claimed in claim 7, wherein each of the first connecting portion and the second connecting portion comprises a resin having a higher melting point than that of the thermal actuating vent.

13. The rechargeable battery as claimed in claim 7, wherein
a first catch is arranged at a surface of the first snap groove, and
a second catch is arranged at a surface of the second snap groove.

14. The rechargeable battery as claimed in any one of claims 1-13, further comprising a first terminal and a second terminal on the cap plate,
wherein the first vent member is located between the first terminal and the second terminal.

15. A battery pack comprising:
a housing; and
a plurality of rechargeable batteries accommodated in the housing,
wherein each of the rechargeable batteries comprises:
a case;
an electrode assembly accommodated in the case;
a cap plate facing the electrode assembly; and
a first vent member on the cap plate,
wherein the first vent member is coupled to the cap plate in a snap-fit manner,
as defined in any one of claims 1-14.
